# EUROPEAN PATENT APPLICATION

(11) **EP 3 919 265 A1**
(43) Date of publication of application: **08.12.2021**
(21) Application number: 20178594.6
(22) Date of filing: 05.06.2020
(51) Int. Cl.: B32B 1/00, B32B 7/08, B32B 7/12, B32B 7/03, B32B 15/10, B32B 15/18, B32B 15/20, B32B 19/02, B32B 19/04, B32B 21/02, B32B 21/04, B61D 17/04, B61D 17/06, B61D 17/08, B32B 21/00

(54) **EXTERIOR WALL SEGMENT FOR A RAILWAY VEHICLE, RAILWAY VEHICLE AND METHOD FOR MANUFACTURING AN EXTERIOR WALL SEGMENT**

(71) Applicant: Deutsches Zentrum für Luft- und Raumfahrt e.V., 51147 Köln (DE); ALSTOM Transport Deutschland GmbH, 38239 Salzgitter (DE)
(72) Inventor: Beeh, Elmar, 76307 Karlsbad (DE); Käse, David, 70199 Stuttgart (DE); Piazza, Giovanni, 72108 Ergenzingen (DE); Boese, Ben, 38239 Salzgitter (DE); Albert, Torsten, 38239 Salzgitter (DE)
(74) Representative: Hoeger, Stellrecht & Partner Patentanwälte mbB

(57) **Abstract**

The invention relates to an exterior wall segment for an exterior wall arrangement (12) of a railway vehicle (10) comprising a plurality of exterior wall segments (14; 80), the exterior wall segment (14; 80) comprising a sandwich composite structure (28) comprising a core element (30), an outer cover element (32) and an inner cover element (34), the outer and inner cover elements (32, 34) covering the core element (30) at least in sections, preferably entirely or substantially entirely, on mutually remote sides thereof, wherein the core element (30) is made of a wooden material (40). The present invention also relates to a railway vehicle and to a method for manufacturing an exterior wall segment of a railway vehicle.

## Description

### Field of the invention:

The present invention relates to an exterior wall segment for an exterior wall arrangement of a railway vehicle.

Further, the present invention relates to a railway vehicle having an exterior wall arrangement, for example a carriage vehicle.

Further, the present invention relates to a method for manufacturing an exterior wall segment of an exterior wall arrangement of a railway vehicle.

### Background of the invention:

In manufacturing exterior walls for railway vehicles, in particular carriage vehicles, various construction methods have been used. In particular, differential, integral and composite or hybrid construction methods are known. Typically, extruded aluminum profiles or steel profiles as load-bearing structures and steel sheets as plankings have been used. Recently, fiber composites and sandwich materials using carbon (such as, i. e., CFRP, Carbon Fiber Reinforced Polymer) or honeycombs have been used. For example, carriage roof structures made of carbon-based materials or sidewall arrangements having segments with a honeycomb sandwich construction have been employed. Sandwich materials have also been used for constructing carriage floor structures.

Conventional materials used for manufacturing wall segments have the drawback that, when cover sheets made of metal are used, they show a high thermal conductivity. The high thermal conductivity must be compensated for by insulation materials, resulting in an increase in weight of the wall segment and, in particular, increased manufacturing costs. "Framework structures" are required as additional load-bearing structures on account of the considerably low form stability of exterior sheet materials or common sandwich materials. Another drawback, in addition to increased material use and increased weight, is the choice of the materials themselves. Often, these can only be produced and processed by energy-intensive manufacturing processes.

### Object of the invention:

An object underlying the present invention is to provide an exterior wall segment for an exterior wall arrangement of a railway vehicle with improved characteristics. A further object is to provide a railway vehicle having such an exterior wall segment, as well as a method for manufacturing an exterior wall segment.

### Summary of the invention:

In accordance with the invention, an exterior wall segment for an exterior wall arrangement of a railway vehicle comprising a plurality of exterior wall segments is proposed. The exterior wall segment comprises a sandwich composite structure comprising a core element, an outer cover element and an inner cover element, the outer and inner cover elements covering the core element at least in sections, preferably entirely or substantially entirely, on mutually remote side thereof, wherein the core element is made of a wooden material.

The exterior wall segment in accordance with the invention comprises an outer cover element oriented towards an outside direction of the wall arrangement as well as an inner cover element oriented towards an inner side such as, e. g., an accommodating space of the vehicle. A core element being made of a wooden material is sandwiched, at least in sections, between the outer and inner cover elements. Preferably, the cover elements entirely cover the core element.

The sandwich composite structure allows for form stability and stiffness and promotes a lightweight construction of the exterior wall segment. Using a wooden material for the core element allows for integrating thermal and/or acoustic insulation into the wall segment. Separate thermal and/or acousting insulation material can preferably be omitted, thus making it possible to facilitate the manufacturing process and reducing weight of the wall segment. Owing to the typically higher density of the wooden material compared to core elements of generic sandwich-type wall segments the core element preferably forms a load-bearing supporting structure. The overall composite is of high stiffness, making it possible to simplify the overall configuration of the wall segment and allow functional integration with respect to, e. g., thermal and acoustic insulation, definition of load paths and provision of connection elements for attachment parts.

### Description of preferred embodiments:

Preferably, the exterior wall arrangement comprising a plurality of exterior wall segments serves to absorb and distribute axial and vertical loads. For example the considerably high axial loads acting upon the vehicle car body resulting from the substitute loads in the case of a crash may be absorbed by the exterior wall arrangement. Likewise, roof loads are absorbed by the exterior wall arrangement.

In a preferred embodiment, the wooden material is engineered wood.

Alternatively, solid wood is used as the wooden material in a preferred embodiment.

In a preferred embodiment the wooden material is molded wood. For example, the core element made of molded wood has a near net-shape of the exterior wall segment. Using molded wood being brought into shape significantly facilitates the manufacturing process for the exterior wall segment. For example, not only straight wooden panels but also more complex shapes in two and/or three dimensions can be easily implemented.

In a preferred embodiment, it is beneficial for the wooden material to be or to comprise laminated wood. For example, a plurality of wooden layers are arranged on top of each other, it being possible for the orientation of fibers of the wooden material and the respective layers to be different. Preferably, this makes it possible to define load paths within the core element.

In an embodiment, it is preferred for the wooden material to be or to comprise veneered wood. For example, a plurality of veneered wooden layers on top of each form the core element.

It is possible for the wooden material to be or to comprise an oriented strand board (OSB).

In a preferred embodiment, it is preferred for the wooden material to be or to comprise a splinter board, also referred to as particle board or chipboard.

For example, an oriented strand board or a splinter board comprises small wooden particles such as strands, splinters or wood chips being glued or adhesively bonded together.

In a preferred embodiment, it is possible for the wooden material to be or to comprise a fiberboard, also referred to as medium-density fiberboard (MDF) made out of wood fibers.

In a preferred embodiment, it is possible for the wooden material to be or to comprise plywood, for example plywood having a plurality of wooden layers stacked on top of each other.

Using a plurality of stacked wooden layers such as, for example, in laminated wood, veneered wood or plywood, the stacking direction is preferably oriented from the outer to the inner cover element.

In a preferred embodiment, the wooden material is or comprises bentwood, for example solid wood provided with a near net-shape of the exterior wall segment.

In a preferred embodiment, the core element is made of molded wood based on laminated or veneered wood.

It is beneficial for the wooden material of the core element to be unitary.

In a preferred embodiment, the wooden material comprises a plurality of sandwiched layers, each layer comprising wood having a preferred orientation of wooden fibers, the orientation of fibers in adjacent layers being different from one another. This makes it possible to enhance the stiffness and the load-bearing properties of the core element. Preferably, by choosing a respective orientation of fibers, it is made possible to define load paths for custom-tailored absorption of loads acting upon the wall segment.

Provision can be made for at least one of the core element, the outer cover element and the inner cover element to comprise multiple parts or to consist of multiple parts. A respective one of the aforementioned elements may itself comprise or consist of multiple parts.

In the alternative or in addition, it may be expedient for at least one of the core element, the outer cover element and the inner cover element to be configured to be monolithic. In the present case, this can in particular be understood as the core element, the outer cover element or the inner cover element being integrally formed.

In a preferred embodiment, at least one of the outer cover element and the inner cover element is made of metal "Metal" in the present case also includes "metal alloy". Aluminum or steel may be preferred materials for the cover elements, for example.

Alternatively or in addition, at least one of the outer cover element and the inner cover element is made of a fiber composite material having a matrix and fibers embedded therein. All types of fibers and matrices known to the person skilled in the art are generally possible. As an example, CFRP (carbon fiber reinforced polymer) is an advantageous fiber composite material to be used.

At least one of the outer and inner cover elements can be configured as a sheet.

Preferably, at least one of the outer and the inner cover elements is configured as sheet metal or as a sheet of fiber composite material.

In a preferred embodiment, the outer cover element is made of metal, the core element is made of a wooden material and the inner cover element is made of a fiber composite material.

It is expedient for the core element to be in surface-to-surface contact with at least one of the outer cover element and the inner cover element.

Connection methods for connecting the core element to at least one of the cover elements include, but are not limited to: positive engagement, force-fit, adhesive bonding, screwing, riveting, welding, gluing.

Preferably, the core element and at least one of the cover elements can comprise cooperating or matching connection elements. The core element and at least one cover element can engage into one another or behind one another.

In a preferred embodiment, the exterior wall segment comprises reinforcement elements for the reinforcement of the composite structure. This makes it possible to enhance the rigidity of the wall segment and the exterior wall arrangement.

Preferably, the reinforcement elements are arranged on an inner side of the wall segment, i.e. a side thereof directed to an interior of the railway vehicle.

The reinforcements for example comprise stringer elements oriented in a longitudinal direction of the railway vehicle.

Alternatively or additionally, the reinforcement elements comprise frame elements oriented transversely to a longitudinal direction. The frame elements may also be referred to as bulkhead or former elements.

In preferred embodiments, the reinforcement elements comprise a sandwich composite structure comprising a core element and cover elements at least partially covering the core element on mutually remote sides thereof.

Preferably, the core element of the reinforcement elements is made of a wooden material. In particular, at least one of the wooden materials mentioned above can be used.

It is possible for the reinforcement elements to be provided separately and to be fixed to the sandwich composite structure of the exterior wall segment. For example, the reinforcement elements are fixed to an inner side of the inner cover element.

Alternatively or additionally, it is possible for the reinforcement elements to be formed by the core element and the inner cover element of the exterior wall segment. For example, the core element comprises a projection or bead-like deformation, and the inner cover element preferably comprises a corresponding projection or deformation to cover the core element. Integrating the reinforcement elements into the design, structure and configuration of the exterior wall segment significantly simplifies the manufacturing of the exterior wall arrangement.

It has already been mentioned that functional integration can be made possible with the configuration of the exterior wall segment.

For example, at least one connection element is formed by, attached to and/or accommodated in the exterior wall segment for the connection of further components of the railway vehicle thereto. For example, the reinforcement elements can comprise or form connection elements for equipment such as seats of the railway vehicle.

It is possible for a through-opening to be formed in the wall segment, wherein the core element and the outside and inside cover elements comprise corresponding through-openings aligned with one another. The through-openings facilitate integration of windows into the exterior wall arrangement, for example.

A railway vehicle in accordance with the present invention comprises a support structure, comprising or forming a frame structure, an undercarriage fixed to the support structure, and an exterior wall arrangement, comprising at least one exterior wall segment of the aforementioned type, wherein the at least one exterior wall segment is fixed to the frame structure.

The advantages that can be achieved in accordance with such a configuration have already been mentioned with respect to the explanation of the exterior wall segment in accordance with the invention. In this respect, reference is made to the aforementioned explanations.

Preferred embodiments of the railway vehicle result from preferred embodiments of the exterior wall segments. Reference is made to the above explanations.

Preferably, the outer wall arrangement comprises a plurality of individual modules, i.e. a plurality of exterior wall segments. It is possible for the wall segments to be produced separately and to be connected separately to the frame structure of the support structure. Assembly of the railway vehicle is thereby significantly facilitated.

As mentioned at the outset, the present invention also relates to a method.

A method for manufacturing an exterior wall segment of an exterior wall arrangement of a railway vehicle in accordance with the present invention comprises:
- providing a core element made of a wooden material, the core element having the near net-shape of the exterior wall segment;
- providing an outer cover element and an inner cover element to cover the core element at least in sections, preferably entirely or substantially entirely; and
- connecting the core element to the outer and inner cover elements.

The advantages that have already been mentioned in connection with the explanation of the wall segment in accordance with the invention can be achieved by carrying out the inventive method. In this respect, reference is made to the aforementioned explanations.

Preferred embodiments of the method result from preferred embodiments of the exterior wall segment in accordance with the invention. Reference is made to the above explanations.

For example, the exterior wall segment can be fabricated using a pressing process, it thereby being possible to avoid complex "straightening work" commonly required for a generic steel construction.

### Description of the drawing figures:

The subsequent explanation of preferred embodiments of the present invention serves in connection with the drawings for a better understanding of the present invention. In the drawings:
- Figure 1:: is a schematic illustration of a railway vehicle in accordance with the present invention, comprising a plurality of exterior wall segments in accordance with the present invention;
- Figure 2:: is a schematic sectional view of the railway vehicle shown in Figure 1;

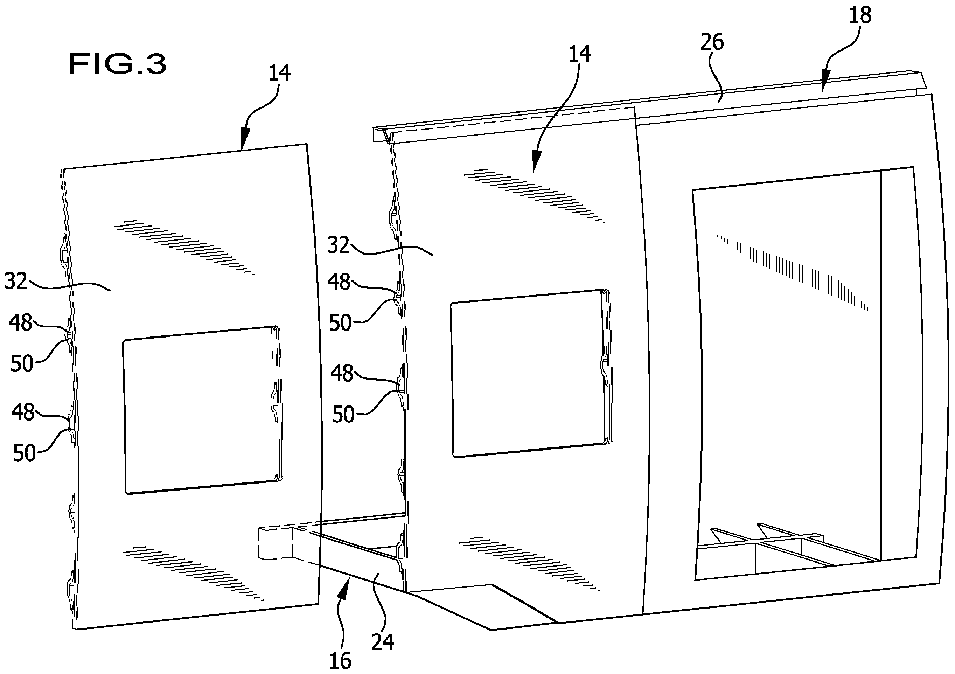

- Figure 3:: is a perspective schematic view of an exterior wall arrangement of the railway vehicle shown in Figure 1, shown from the outside;
- Figure 4:: shows the wall arrangement of Figure 3 shown from the inside;
- Figure 5:: shows an exterior wall arrangement in accordance with the present invention in a perspective exploded view;
- Figure 6:: is an enlarged partial view of the wall arrangement;
- Figure 7:: is a schematic enlarged partial illustration of detail A in Figure 6;
- Figure 8:: is an illustration corresponding to Figure 4 in a further embodiment of the present invention; and
- Figure 9:: is an illustration corresponding to Figure 5 in the embodiment shown in Figure 8.

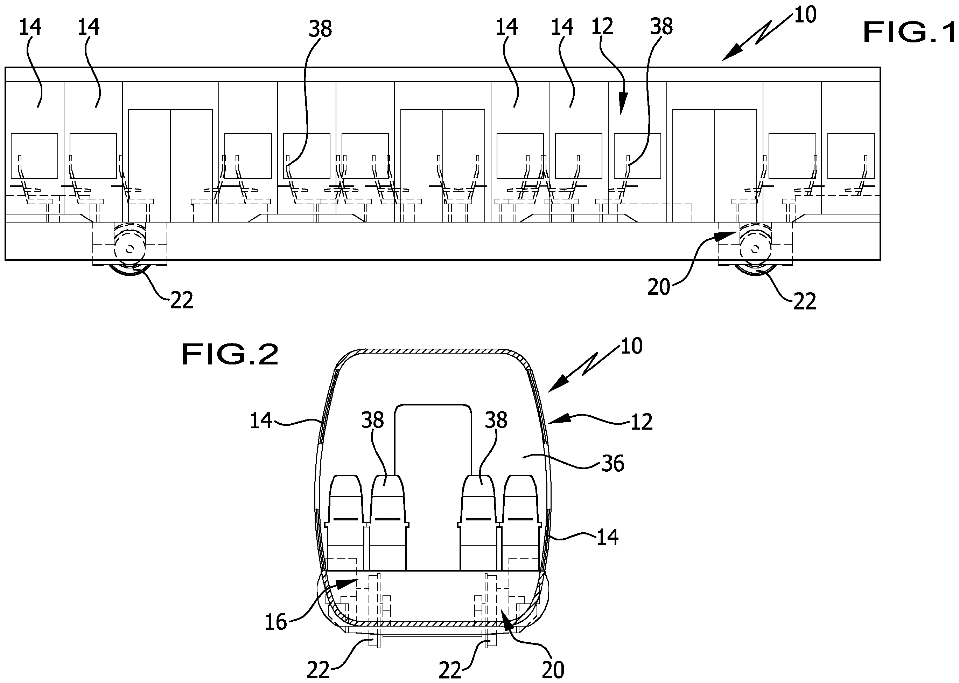

Figure 1 shows a preferred embodiment of a railway vehicle in accordance with the present invention, configured as a carriage for the transportation of passengers, not shown in the drawings. The vehicle is in its entirety designated with reference numeral 10.

The vehicle 10 comprises a car body having an exterior wall arrangement 12. In the present case, the wall arrangement 12 is a sidewall arrangement, wherein the vehicle comprises, on mutually remote sides thereof, two wall arrangements 12 of symmetric configuration. For this reason only one wall arrangement 12 will be explained in the following.

The wall arrangement 12 comprises a plurality of exterior wall segments 14. The wall segments 14 are preferred embodiments of the exterior wall segments in accordance with the present invention. Further, the wall segments 14 can be manufactured in accordance with a preferred embodiment of the method in accordance with the present invention.

The vehicle 10 comprises a support structure 16, wherein the support structure 16 comprises or forms a frame structure 18. Further, the vehicle 10 comprises an undercarriage 20. The undercarriage 20 has wheels 22 to engage rails, not shown in the drawings.

The frame structure 18 has a base element 24 and a longitudinal element 26, disposed at a distance thereto. The individual wall segments 14 are located between the base element 24 and the longitudinal element 26. The base element 24 serves as a support element and the longitudinal element 26 configured as a profile serves to hold and, in addition, align the individual wall segments 14. In this way, the wall segments 14 are flush so as to form the wall arrangement 12.

As is evident from the foregoing and the following explanations the wall segments 14 can be manufactured individually. In particular individual modules of the wall segments 14, each forming a section of the wall arrangement 12, are manufactured in a relatively simple and cost-friendly manner and are then connected to form the wall arrangement 12.

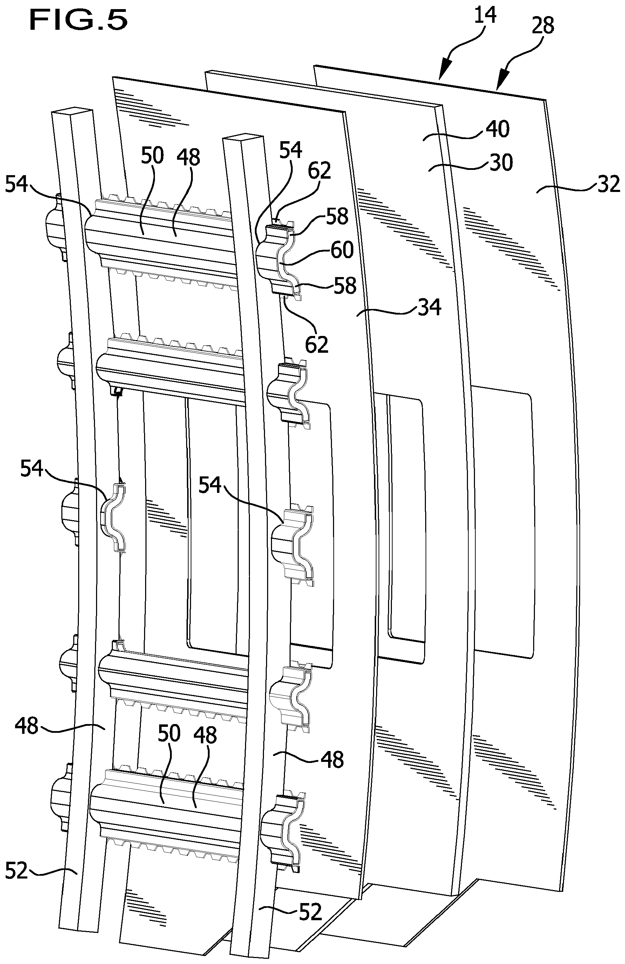

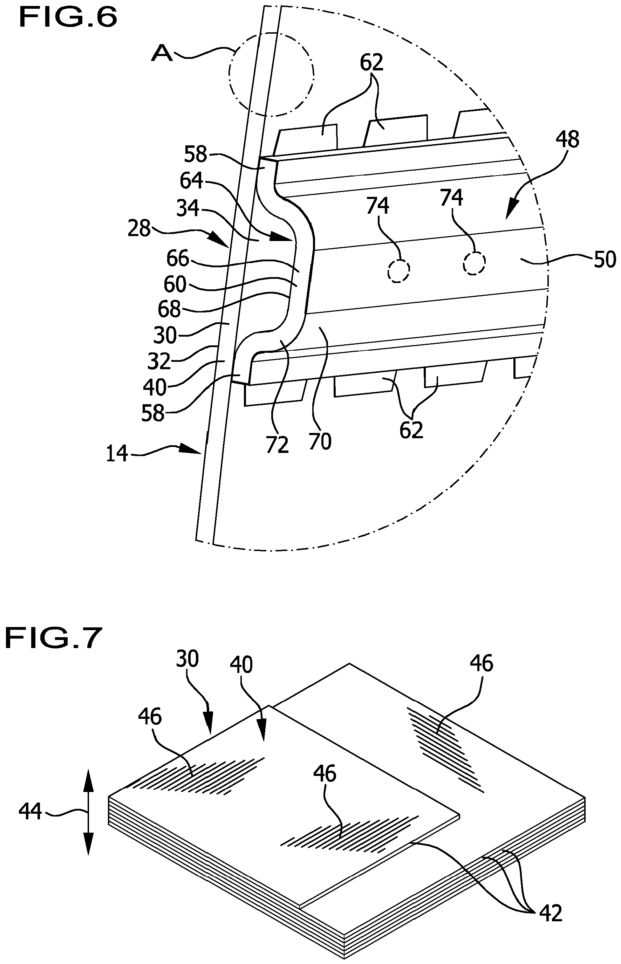

As will be apparent from Figures 5 and 6, in particular, the wall segment 14 comprises a sandwich composite structure 28. The structure 28 comprises a core element 30, an outer cover element 32 and an inner cover element 34.

"Outer" and "inner" in the present case relate to a use of the wall segment 14 in accordance with specifications. The outer cover element 32 is directed to the outside of the vehicle 10. The inner cover element 34 is directed towards the inside of the vehicle 10, in particular an accommodating space 36 where, in the present case, seats 38 for passengers are disposed.

In the present case, it is preferred for the cover elements 32, 34 to be arranged entirely on mutually remote sides of the core element 30. The core element 30 is sandwiched between the cover elements 32 and 34.

In accordance with the invention, the core element 30 is made of a wooden material 40. The cover elements 32 and 34 are made of metal, in particular sheet metal, for example aluminum or steel.

In a different embodiment (not shown), it is possible for the cover element 32 and/or the cover element 34 to be made of a fiber composite material, in particular as a sheet of a fiber composite material. For example, the outer cover element 32 is made of sheet metal and the inner cover element 34 is made of a sheet of fiber composite material.

The use of a wooden material 40 for the core element 30 provides the wall segment 14 with significant advantages compared to conventional wall segments. The wooden material 40, for example, has an inherent stiffness, making it possible to absorb loads inside the wooden material 40. Further, the wooden material 40 provides acoustic and thermal insulation which allows for significantly decreasing the complexity of the wall segment 14.

In the present case it has shown expedient for the wooden material 40 to be molded wood, in particular based on veneered wood. Molded wood makes it possible to provide the core element 30 in a near net-shape of the wall segment 14. Prior to assembly with the cover elements 32 and 34 the core element 30 is shaped using a conventional shaping process and thereby making it possible to dispense with time-consuming and costly separate manufacturing processes after assembly with load-bearing structures as in conventional railway vehicles.

The shape of the cover elements 32 and 34 corresponds to the shape of the core element 30. The cover elements 32 and 34 can themselves also be fabricated using relatively simple and low-cost processes.

Following fabrication the cover elements 32 and 34 are connected to the core element 30 and brought into surface-to-surface contact therewith. For example, a pressing process can be used to connect the core element 30 to the cover elements 32 and 34. However, any type of connection method is conceivable, for example positive engagement, force-fit, screwing, riveting, welding and gluing.

In the present example, the core element 30 and the cover elements 32, 34 each have a through-opening formed therein. The through-openings are aligned with one another. For example, the through-openings are provided for the integration of a window into the wall segment 14.

The sandwich structure 28 provides a very high stiffness and strength. For example axial loads, acting upon the car body in the direction of the vehicle 10, can be absorbed, the axial loads resulting from the substitute loads for the crash case. Likewise, roof loads resulting from different load cases can be absorbed in the sandwich structure 28.

As shown in Figure 7 the wooden material 40 comprising veneered wood has a plurality of wooden layers 42. The layers 42 are stacked. The stacking direction 44 corresponds to the outside-inside direction of the vehicle 10.

Hatchings 46 symbolize wooden fibers of a respective layer 42. As is schematically shown, it is possible for the fibers of adjacent layers 42 to have different orientations. Such a configuration does not only enhance the rigidity of the wooden material 40 but also allows for the mechanical properties of the wooden material 40 to be designed in accordance with requirements.

For example load paths in the wooden material 40 and, thereby, load paths of the composite structure 28 can be customized by providing the necessary orientation of fibers.

In a preferred embodiment, the thickness of the core element 30 is approximately 5 mm to 15 mm, preferably approximately 10 mm.

In a preferred embodiment the thickness of the outer and inner cover elements 32, 34 is approximately 0.5 mm to 1.5 mm, preferably approximately 1 mm.

In a preferred embodiment, the dimensions of a respective wall segment 14 are approximately 2 m to 3 m in the height direction and approximately 1 m to 2 m in the longitudinal direction of the vehicle 10.

As wooden base material, for example beech, alder, maple and oak can be used.

For example, the wooden material 40 comprises an elastic modulus of approximately more than 1,000 N/mm², wherein the elastic modulus is determined in the plane of the core element 30.

For example, a tensile strength of the wooden material 40, determined in the plane of the core element 30 is greater than approximately 0.5 N/mm².

A compressive strength of the wooden material 40, determined perpendicularly to the plane of the core element 30, is preferably greater than approximately 1 N/mm².

A bending stress of the wooden material 40 is preferably greater than approximately 15 N/ mm².

Preferably, the core element 30, the outer cover element 32 and the inner cover element 34 in each case are monolithic, i. e. integrally formed.

In a different preferred embodiment, at least one of the core element 30, the outer cover element 32 and the inner cover element 34 comprises a plurality of parts or consists of a plurality of parts.

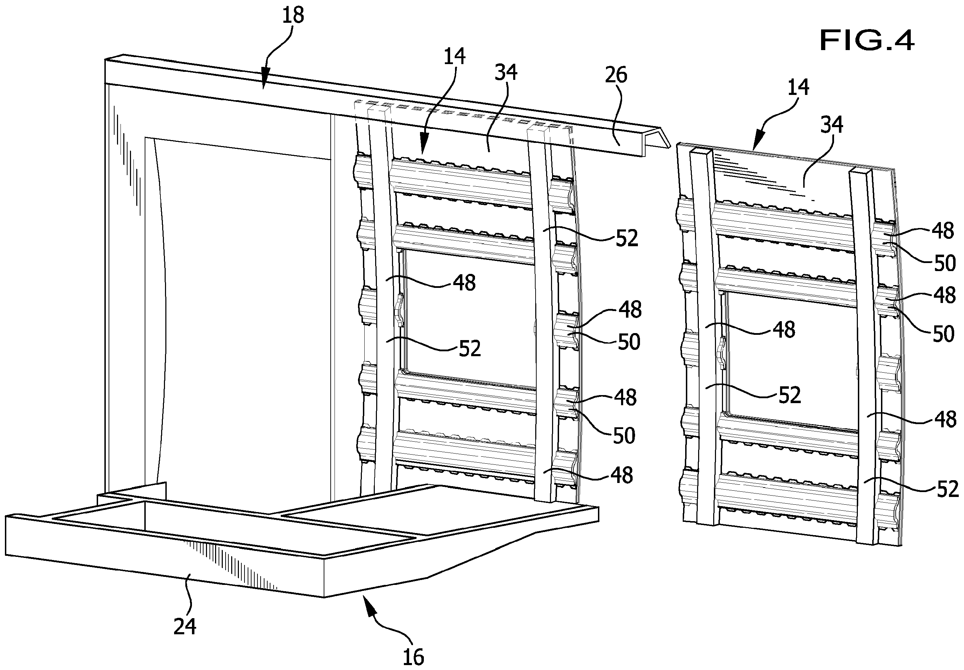

As best seen in Figures 4 to 6, the wall segment 14 comprises reinforcement elements 48 to increase the rigidity of the wall segment 14.

In the present case, the reinforcement elements 48 comprise stringer elements 50 and frame elements 52. The stringer elements 50 are oriented in the longitudinal direction of the vehicle 10. The frame elements 52 are oriented transversely to the longitudinal direction. Preferably, the stringer elements 50 are connected to the frame elements 52.

In the present case, the frame elements 52 are configured as bars connected to the inside of the inner cover element 34. Any type of connection is conceivable.

It is possible for the frame elements 52 to comprise recesses 54 to accommodate the stringer elements 50. A positive fit is preferred.

In the present example the stringer elements 52 comprise a base section 58 with two segments oriented towards the cover element 34 and a projecting section 60 located between the segments and oriented away from the cover element 34. The base section 58 contacts the cover element 34. Moreover, the base section 58 comprises connecting members 62. The connecting member 62 are flap-like to allow a flange-like contact between the stringer elements 50 and the cover element 34. Any type of connection between the stringer elements 50 and the cover element 34 is conceivable.

In the present case, the stringer elements 50 comprise a sandwich composite structure 64. The structure 64 has a core element 66 and cover elements 68 and 70. The cover element 68 and 70 cover the core element 66 on mutually remote sides thereof. Preferably, the cover elements 68 and 70 are in surface-to-surface contact with the core element 66 and completely cover the core element 66.

Preferably, the core element 66 is made of a wooden material 72. The cover elements 68 and 70 are preferably made of metal, in particular sheet metal, for example aluminum or steel.

The wooden material 72 may be molded wood based on veneered wood, for example like the wooden material 40.

It is possible for the wall segment 14 to comprise connection elements 74, schematically shown in Figure 6. The connection element 74 can be integrally formed in either of the composite structures 28, 64. For example, the connection elements 74 are formed in or located on the stringer elements 50, as shown in Figure 6.

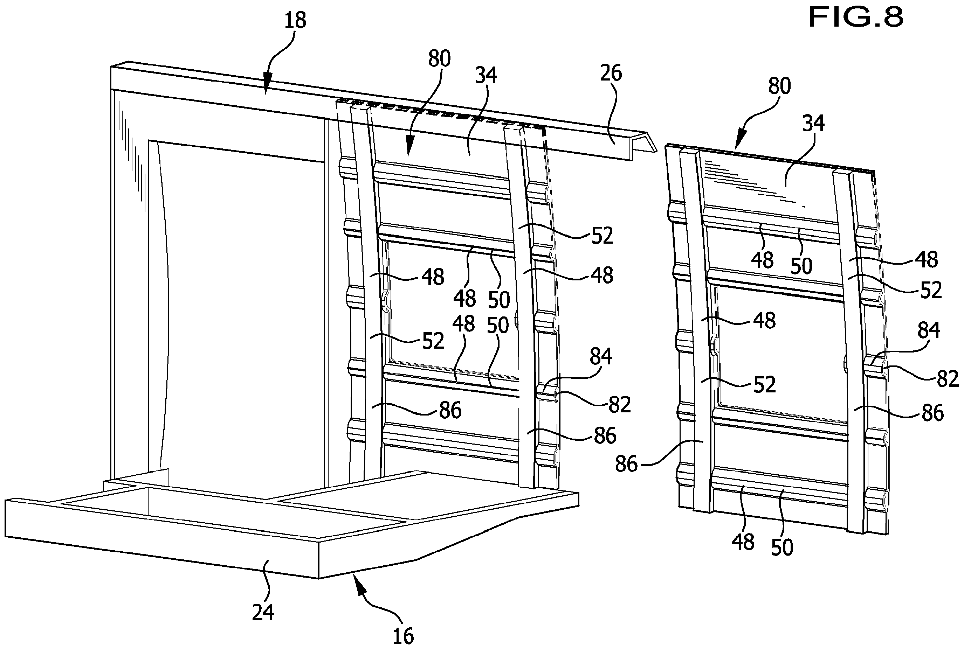

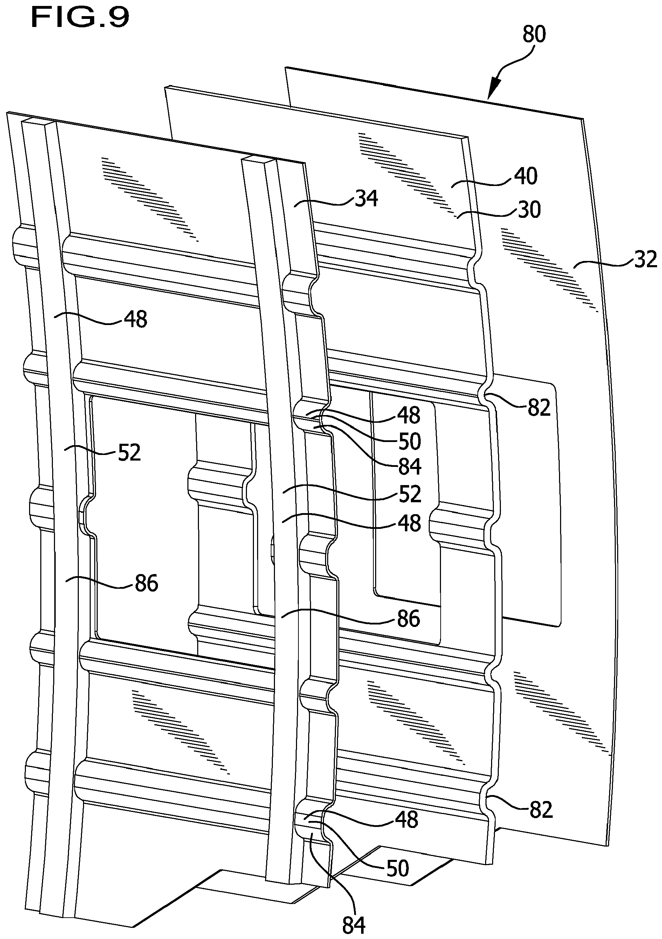

Reference is now made to Figures 8 and 9 showing a preferred embodiment of the exterior wall segment according to the present invention, labelled with reference numeral 80. The wall segments 80 can be used, for example, in the vehicle 10 instead of, or in addition to, the wall segments 14 to form the exterior wall arrangement 12.

For like features of the wall segment 14 and the wall segment 80 identical reference numerals are used. The advantages that can be achieved with the wall segment 14 can also be achieved with the wall segment 80. In the following only the main differences between the wall segments 14 and 80 are explained.

The wall segment 80 also comprises the reinforcement elements 48. In contrast to the wall segment 14 the reinforcement elements 48 are part of the composite structure 28 which makes it possible to omit separate reinforcement elements 48 as used in the wall segment 14.

The stringer elements 50 are in part integrally formed in the core element 30 and the inner cover element 34. In particular, the core element 30 comprises bead-like deformations 82 oriented towards the inner cover element 34. The inner cover element 34 comprises bead-like deformations 84 oriented towards the inside of the vehicle 10.

The deformations 82 and 84 in each case extend along the longitudinal direction of the vehicle 10. The deformations 82 positively engage into the deformations 84. In other words the deformations 82, 84 are complementary in shape.

The frame elements 52 are integrally formed on the inner cover element 34. In the present case, the frame elements 50 are projections 86 on the sheet of the cover element 34. Bead-like deformations of the cover element 34 can be used as an alternative to form the frame elements 52.

The present invention makes it possible to reduce deliver times for the wall segments 14, 80 in comparison to conventional wall segments 14 formed as aluminum sections, for example. Compared to steel constructions of the wall arrangement working hours can be reduced with the present invention. Smaller installation spaces are required for forming the wall segments compared to conventional installations. Further, working requirements can be facilitated compared to conventional processes. For example, welding can be dispensed with for forming the wall segments 14, 80.

### List of reference numerals:

- 10: railway vehicle
- 12: exterior wall arrangement
- 14: exterior wall segment
- 16: support structure
- 18: frame structure
- 20: undercarriage
- 22: wheel
- 24: base element
- 26: longitudinal element
- 28: sandwich composite structure
- 30: core element
- 32: outer cover element
- 34: inner cover element
- 36: accommodating space
- 38: seat
- 40: wooden material
- 42: layer
- 44: stacking direction
- 46: hatching
- 48: reinforcement element
- 50: stringer element
- 52: frame element
- 54: recess
- 58: base section
- 60: projecting section
- 62: connecting member
- 64: sandwich composite structure
- 66: core element
- 68: cover element
- 70: cover element
- 72: wooden material
- 74: connection element
- 80: exterior wall segment
- 82: deformation
- 84: deformation
- 86: projection

## Claims

1. Exterior wall segment for an exterior wall arrangement (12) of a railway vehicle (10) comprising a plurality of exterior wall segments (14; 80), the exterior wall segment (14; 80) comprising a sandwich composite structure (28) comprising a core element (30), an outer cover element (32) and an inner cover element (34), the outer and inner cover elements (32, 34) covering the core element (30) at least in sections, preferably entirely or substantially entirely, on mutually remote sides thereof, wherein the core element (30) is made of a wooden material (40).

2. Exterior wall segment in accordance with claim 1, **characterized in that** the wooden material (40) is engineered wood or solid wood.

3. Exterior wall segment in accordance with claim 1 or 2, **characterized in that** the wooden material (40) is or comprises one of the following:
- molded wood;
- laminated wood;
- veneered wood;
- oriented strand board (OSB);
- splinter board;
- fiberboard (MDF);
- plywood; or
- bentwood.

4. Exterior wall segment in accordance with any one of the preceding claims, **characterized in that** the wooden material (40) comprises a plurality of sandwiched layers (42), each layer (42) comprising wood having a preferred orientation of wooden fibers, the orientation of fibers in adjacent layers (42) being different from one another.

5. Exterior wall segment in accordance with any one of the preceding claims, **characterized in that** at least one of the core element (30), the outer cover element (32) and the inner cover element (34) comprises or consists of multiple parts or is configured to be monolithic.

6. Exterior wall segment in accordance with any one of the preceding claims, **characterized in that** at least one of the outer cover element (32) and the inner cover element (34) is made of metal or of a fiber composite material and/or is configured as a sheet, in particular at least one of the outer and the inner cover elements being configured as sheet metal or as a sheet of fiber composite material.

7. Exterior wall segment in accordance with any one of the preceding claims, **characterized in that** at least one of the following applies:
- the core element (30) is in surface-to-surface contact with at least one of the outer cover element (32) and the inner cover element (34); or
- the core element (30) is connected to the cover elements (32, 34) by means of positive engagement, force-fit, and/or adhesive bonding, in particular by at least one of screwing, riveting, welding and gluing.

8. Exterior wall segment in accordance with any one of the preceding claims, **characterized in that** the exterior wall segment (14; 80) comprises reinforcement elements (48) for the reinforcement of the composite structure (28), the reinforcement elements (48) in particular being arranged on an inner side of the wall segment (14; 80).

9. Exterior wall segment in accordance with claim 8, **characterized in that** the reinforcement elements (48) comprise at least one of the following:
- stringer elements (50) oriented in a longitudinal direction of the railway vehicle (10); or
- frame elements (52) oriented transversely to a longitudinal direction.

10. Exterior wall segment in accordance with claim 8 or 9, **characterized in that** the reinforcement elements (48) comprise a sandwich composite structure (64) comprising a core element (66), preferably being made of a wooden material (72), and cover elements (68, 70) at least partially covering the core element (66) on mutually remote sides thereof.

11. Exterior wall segment in accordance with any one of claims 8 to 10, wherein at least one of the following applies:
- separate reinforcement elements (48) are provided that are fixed to the sandwich composite structure (28), in particular to an inner side of the inner cover element (34); or
- the reinforcement elements (48) are formed by the core element (30) and the inner cover element (34), the core element (30) comprising a projection or bead-like deformation (82), and the inner cover element (34) comprises a corresponding projection or deformation (84) to cover the core element (30).

12. Exterior wall segment in accordance with any one of the preceding claims, **characterized in that** at least one connection element (74) is formed by, attached to and/or accommodated in the exterior wall segment (14; 80) for the connection of further components of the railway vehicle (10) thereto.

13. Exterior wall segment in accordance with any one of the preceding claims, **characterized in that** a through-opening is formed in the wall segment (14; 80), wherein the core element (30) and the outside and inside cover elements (32, 34) comprise corresponding through-openings aligned with one another.

14. A railway vehicle, comprising a support structure (16), comprising or forming a frame structure (18), an undercarriage (20) fixed to the support structure (16), and an exterior wall arrangement (12), comprising at least one exterior wall segment (14; 80) in accordance with any one of the preceding claims, the at least one exterior wall segment (14; 80) being fixed to the frame structure (18).

15. A method for manufacturing an exterior wall segment of an exterior wall arrangement of a railway vehicle, said method comprising:
- providing a core element made of a wooden material, the core element having the near net-shape of the exterior wall segment;
- providing an outer cover element and an inner cover element to cover the core element at least in sections, preferably entirely or substantially entirely; and
- connecting the core element to the outer and inner cover elements.
